(19) Europäisches Patentamt
European Patent Office
Office européen des brevets

(11) **EP 2 644 649 B1**

(12) **EUROPEAN PATENT SPECIFICATION**

(45) Date of publication and mention of the grant of the patent:
**05.06.2019 Bulletin 2019/23**

(21) Application number: **11843148.5**

(22) Date of filing: **24.11.2011**

(51) Int Cl.:
***C08K 9/04*** *(2006.01)* ***C08L 101/00*** *(2006.01)*
***D06M 13/02*** *(2006.01)* ***B29B 15/10*** *(2006.01)*

(86) International application number:
**PCT/JP2011/077046**

(87) International publication number:
**WO 2012/070616 (31.05.2012 Gazette 2012/22)**

# (54) METHOD FOR PRODUCING PLANT FIBER COMPOSITE MATERIAL TO BE KNEADED WITH MATRIX

VERFAHREN ZUR HERSTELLUNG EINES PFLANZENFASERVERBUNDWERKSTOFFS ZUM KNETEN MIT EINER MATRIX

PROCÉDÉ DE FABRICATION D'UN MATÉRIAU COMPOSITE À BASE DE FIBRES VÉGÉTALES À PÉTRIR AVEC UNE MATRICE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **25.11.2010 JP 2010261892**
**29.07.2011 JP 2011167029**

(43) Date of publication of application:
**02.10.2013 Bulletin 2013/40**

(73) Proprietor: **Oji Holdings Corporation**
**Chuo-ku**
**Tokyo 104-0061 (JP)**

(72) Inventors:
- **SUZUKI Shigeru**
**Tokyo 135-8558 (JP)**
- **TACHIBANA Hiroyasu**
**Tokyo 135-8558 (JP)**

(74) Representative: **Kordel, Mattias et al**
**Gleiss Große Schrell und Partner mbB**
**Patentanwälte Rechtsanwälte**
**Leitzstrasse 45**
**70469 Stuttgart (DE)**

(56) References cited:

| | |
|---|---|
| **EP-A1- 0 109 292** | **WO-A1-2007/073218** |
| **WO-A1-2009/135798** | **WO-A2-2007/025292** |
| **GB-A- 791 554** | **JP-A- 6 073 231** |
| **JP-A- H08 506 386** | **JP-A- 2009 073 878** |
| **US-A- 3 519 469** | **US-A- 4 125 493** |

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

**Description**

TECHNICAL FIELD

The present invention relates to a method for producing a plant fiber composite material suitable for a filler used to knead with a matrix resin, and more particularly to a composite material of plant fibers, such as natural pulp, having excellent dispersing stability in a matrix resin, and to a method for producing the same.

BACKGROUND ART

A process of mixing short cut organic or inorganic fibers with a matrix resin is known as a method for reinforcing the matrix resin. A rubber compounded with these short fibers has improved elastic modulus and tearing strength, so that the amount of rubber used in a rubber product such as a tire, a belt, and a hose can be reduced, thereby effectively achieving resource saving and weight saving. A newly spun fiber is, however, usually cut short by a fiber manufacturer for use as a fiber material to be compounded into a matrix resin for the purpose of short fiber reinforcement, resulting in high cost (Patent Literature 1).

Further, although a method for reinforcing a rubber by compounding shredded recycled newspaper has been proposed, this method is insufficient for reinforcing a rubber due to insufficient dispersion of cellulose fibers in rubber (Patent Literature 2).

The addition and mixing of plant fibers as a filler is effective to change the viscosity characteristics of a matrix resin for imparting stability and to complement the strength with a structure created between matrixes. In addition, using waste paper as inexpensive plant fibers conforms with the intention of environmental recycling and reuse.

Simply adding plant fibers to a resin and then kneading them, however, causes lumps of plant fibers to remain after kneading due to the agglomeration force between plant fibers which is stronger than the intermolecular force between the plant fiber and the resin, adversely affecting appearance quality and physical properties.

Mixing defibrated fibers of newspaper or the like with powder such as carbon black or clay in order to prevent the agglomeration between plant fibers, and further with oil in order to prevent scattering of powder and to improve dispersibility in rubber, has been proposed (Patent Literature 3). This can be applied only to rubber. In the case of mixing with a matrix material such as a resin other than rubber, a reduction in strength may be caused by the matrix powder, and a bleeding phenomenon allowing the oil to emerge from the surface of the mixture in contact with the matrix material easily occurs, so that the quality may be deteriorated.

Furthermore, a method for producing a rubber mixture to prevent agglomeration between plant fibers, comprising the steps of dissociating recycled newspaper in an alkali aqueous solution, then adding and mixing an additive of rubber latex, further adding an acid or a metal salt, and dehydrating the mixture after solidification (Patent Literature 4), and a method for adding a plastic modifier to a plastic, wherein the plastic modifier is made by adding and mixing an additive of cationic emulsion of a higher fatty acid and carbon black or an additive of polyethylene fine powder and amphoteric latex to an aqueous slurry of defibrated recycled newspaper in order to prevent agglomeration between plant fibers and then granulating the dehydrated mixture (Patent Literature 5), have been proposed.

Moreover, in order to enhance the binding between a plant fiber and a resin, a method for mixing a latex additive with an aqueous slurry of defibrated waste paper pulp has been proposed (Patent Literatures 6 to 7).

PRIOR ART LITERATURE

Patent Literature

Patent Literature 1: JP Patent Publication (Kokai) No. 09-12770 A (1997)
Patent Literature 2: JP Patent Publication (Kokai) No. 2002-37929 A
Patent Literature 3: JP Patent Publication (Kokai) No. 62-104851 A (1987)
Patent Literature 4: JP Patent Publication (Kokai) No. 11-217466 A (1999)
Patent Literature 5: JP Patent Publication (Kokai) No. 06-73231 A (1994)
Patent Literature 6: JP Patent Publication (Kokai) No. 2007-277482 A
Patent Literature 7: JP Patent Publication (Kokai) No. 2009-91388 A

SUMMARY OF INVENTION

Problem to be Solved by Invention

Although the methods disclosed in Patent Literatures 4 to 7 improve the problem of agglomeration between plant fibers and enhance the binding force between a plant fiber and a matrix resin, there still exist the following problems of:

a high environmental load because a large amount of water is required for forming an aqueous slurry from plant fibers, energy is required for operation of removing water from the aqueous slurry, and purification of a large amount of wastewater is required;
a low production yield because when water is removed from a mixture of an aqueous slurry of plant fibers with an additive, the plant fibers and the additive flow into the wastewater; and
a risk of poor dispersion because lump formation from plant fibers and resin occurs when the mixed composition of the plant fibers and the resin is dried in the method of mixing a latex additive with an aqueous slurry of defibrated waste paper pulp.

It is an object of the present invention to solve the above-mentioned three problems. More specifically, provided are a plant fiber composite material that makes it possible to reduce energy consumption during production, to achieve a good yield, and to have excellent dispersibility in a matrix resin, and a method for producing the same.

Means for Solving Problem

The present inventors have intensively investigated a means to improve the dispersibility of plant fibers when the plant fibers are added to and mixed with a matrix resin. As a result, the present inventors have now found, as a preferred embodiment, providing a filler comprising a plant fiber composite material having excellent dispersibility in matrix resin, by attaching (or applying) fine droplets of a wax dispersion to plant fibers which are in the state of floating and being dispersed in air and, at the same time, drying, or by attaching (or applying) fine droplets of a wax dispersion to plant fibers which are in the state of floating and being dispersed in air in a container, followed by drying, thereby accomplishing the following inventions.

(1) A method for producing a waste paper pulp fiber composite material to be kneaded with a matrix comprising the following steps of: maintaining the waste paper pulp fibers in the state of floating and being dispersed in air in a container; supplying and attaching fine droplets of dispersed wax fine particle dispersion to the surface of the waste paper pulp fibers; and collecting a waste paper pulp fiber composite material comprising wax-attached waste paper pulp fibers in which the surface of each fiber is coated with wax fine particles, wherein the method further comprises a step of sieving the waste paper pulp fibers before the step of maintaining the waste paper pulp fibers in the state of floating and being dispersed in air, or a step of sieving the waste paper pulp fiber composite material after the step of coating the waste paper pulp fibers with wax fine particles.
(2) The method according to item (1), wherein the step of maintaining waste paper pulp fibers in the state of floating and being dispersed in air in a container is performed by forming a fluidized bed of the plant fibers using a device selected from an agitating device, a fluidized bed device, and a device combined of an agitating device and a fluidized bed device.
(3) The method according to item (1) or (2), wherein the step of maintaining the waste paper pulp fibers in the state of floating and being dispersed in air in a container is performed by forming a fluidized bed of the waste paper pulp fibers using an agitating device having agitating impellers arranged
at a plurality of places in the container or a device combined of an agitating device and a fluidized bed device.
(4) The method according to any one of items (1) to (3), wherein the waste paper pulp fibers have a weighted mean fiber length of 0.1 to 5.0 mm.
(5) The method according to any one of items (1) to (4), wherein the waste paper pulp fibers and the wax have a compounding ratio of 0.5 to 75 mass parts of the wax as solid content relative to 100 mass parts of the waste paper pulp fibers.
(6) The method according to any one of items (1) to (5), wherein the wax fine particles dispersed in a wax fine particle dispersion have a mean particle diameter of 0.1 to 100 $\mu$m.
(7) The method according to any one of items (1) to (6), wherein the wax has a weight average molecular weight as determined by gel permeation chromatography (GPC) in the range of 2,000 to 20,000 and a melting endothermic peak temperature determined by differential scanning calorimetry (DSC) of 50 to 200°C.
(8) The method according to any one of items (1) to (7), wherein the matrix is at least one matrix selected from rubbers and thermoplastic resins.

(9) The method according to any one of items (1) to (8), further comprising a step of drying the waste paper pulp fiber composite material to be kneaded with a matrix.

(10) The method according to any one of items (1) to (9), wherein the wax is a natural wax or a synthesized wax.

(11) The method according to item (10), wherein the synthesized wax is a hydrocarbon wax.

(12) The method according to item (11), wherein the hydrocarbon wax is a polyethylene wax, a polypropylene wax, a Fischer-Tropsch wax, or a mixture thereof.

(13) A waste paper pulp fiber composite material to be kneaded with a matrix, which is produced by the method according to any one of items (1) to (12) wherein the surface of each fiber is coated with the wax fine particles, the coated fibers are not glued together, and the waste paper pulp fiber composite material has properties to achieve uniform dispersion in the matrix resin when kneaded with the matrix resin.

(14) The plant fiber composite material to be kneaded with a matrix according to item (13), wherein the plant fiber composite material is in a compressed form.

## EFFECT OF INVENTION

The present invention provides a method for producing a plant fiber composite material for use in kneading with (or kneading into) a matrix, which material comprises wax-attached plant fibers having excellent dispersibility in a matrix resin, with reduced energy consumption during production.

## BRIEF DESCRIPTION OF DRAWINGS

[Fig. 1] This is a scanning electron micrograph of a plant fiber composite material (Example 1) to be kneaded with a matrix, which material consists of wax-attached plant fibers.

[Fig. 2] This is a scanning electron micrograph of a plant fiber composite material (Example 4) to be kneaded with a matrix, which material consists of wax-attached plant fibers.

[Fig. 3] This is a scanning electron micrograph of a plant fiber composite material (Comparative Example 2) to be kneaded with a matrix, which material consists of wax-attached plant fibers.

[Fig. 4] This is a scanning electron micrograph of a plant fiber composite material (Comparative Example 3) to be kneaded with a matrix, which material consists of wax-attached plant fibers.

[Fig. 5] This is a record drawing (15 cm×15 cm) of observation under transmission light of a plate-shaped sample of a kneaded material prepared from: a plant fiber composite material (Example 4) to be kneaded with a matrix; and an isoprene rubber.

[Fig. 6] This is a record drawing (15 cm×15 cm) of observation under transmission light of a plate-shaped sample of a kneaded material prepared from: a plant fiber composite material (Comparative Example 2) to be kneaded with a matrix; and an isoprene rubber.

[Fig. 7] This is a record drawing (15 cm×15 cm) of observation under transmission light of a plate-shaped sample of a kneaded material prepared from: a plant fiber composite material (Comparative Example 3) to be kneaded with a matrix; and an isoprene rubber.

[Fig. 8] This is a record drawing (15 cm×15 cm) of observation under transmission light of a plate-shaped sample of a kneaded material prepared from: a plant fiber composite material (Example 6) to be kneaded with a matrix, which was made from sieved waste paper pulp fibers; and an isoprene rubber.

[Fig. 9] This shows the results of water absorption testing of compressed samples of the plant fiber composite material to be kneaded with a matrix, wherein A, B, C, D and E represent compressed samples of Example 7, Example 8, Comparative Example 4, Comparative Example 5 and Comparative Example 6, respectively.

## MODE FOR CARRYING OUT INVENTION

The present invention relates to a plant fiber composite material to be kneaded with a matrix resin, and to a method for producing the composite material, wherein the composite material is characterized in that a wax has been attached to the surface of plant fibers. The plant fiber composite material of the present invention has excellent dispersibility when added to and kneaded with a matrix resin.

Paper pulp and dissolving pulp can be used as the plant fibers used in the present invention. Specifically, examples of the paper pulp include chemical pulp such as needle bleached kraft pulp (NBKP), leaf bleached kraft pulp (LBKP), and sulfite pulp (SP); various types of mechanical pulp such as ground pulp (GP), stone-ground pulp (SG), pressurized stone-ground pulp (PGP), thermomechanical pulp (TMP), chemi-thermomechanical pulp (CTMP), refiner ground pulp (RGP), refiner mechanical pulp (RMP), and semichemical pulp (SCP); waste paper pulp made from various types of waste paper such as white woodfree letters, card, woodfree paper, white mechanical paper, white Manila, simili paper, high quality colored paper, ticket, cuttings of medium quality or woody paper, magazines, cardboard, recycled printed paper (e.g., recycled newspaper, recycled lightweight coated paper, recycled coated paper with high ash content, and recycled uncoated paper); and supplementary pulp such as rug pulp made from cotton, flax, hemp, jute, Manila hemp, ramie and the like, and stalk pulp or bast pulp such as straw pulp, esparto pulp, bagasse pulp, bamboo pulp, and kenaf pulp. Especially, chemically purified sulfite pulp is known as dissolving pulp, having a high $\alpha$-cellulose content. The dissolving pulp is a raw material for chemical fiber, cellophane, plastic, synthetic glue, and various cellulose derivatives.

The plant fibers may be used alone or in combination.

The plant fiber composite material in the present disclosure is a composite material which is formed by attaching (or applying) a wax to defibrated waste paper pulp fibers in a dry state. In the following, the descriptions of the invention will be based on examples mainly using waste paper pulp.

Conventionally a waste paper pulp and a matrix resin, such as resin or rubber, have been heat-kneaded by a rotary kneader. Upon kneading, a shear force is applied to a melted resin and a waste paper pulp at a gap between a rotary mixing impeller and the inner wall of the kneader. However, due to strong agglomeration force between waste paper pulp fibers, the waste paper fibers easily form lumps.

The present inventors have now considered the necessity of environment enabling the presence of a material to weaken an agglomeration force between waste paper pulp fibers in order to prevent the lump formation. As a result, the present inventors have now found the effectiveness of attaching a wax as uniformly as possible to the surface of the fibers of waste paper pulp, thereby leading to the present invention.

Examples of the waste paper used in the present invention include recycled newspaper, recycled cardboard paper, recycled magazine paper collected from homes, factories, and work places, which are known to the industry. Specifically, the examples include waste paper such as recycled newspapers, books, magazines, telephone books, catalogs, high quality paper, package boxes, cardboard boxes, pulp molds, and paper buffer material, or waste paper or waste printed paper selected from white woodfree letters, card, woodfree paper, mechanical paper, white Manila, simili paper, high quality colored paper, ticket, cuttings of mechanical paper or woody paper, magazines, cardboard (based on the waste paper quality standard table described in "Handbook of Pulp and Paper Technology" (Japan)). In particular, recycled printed paper such as newspaper, lightweight coated paper, coated paper with high ash content, and uncoated paper is preferred. The waste paper may be cuttings or broke collected from manufacturing factories, processing factories, and workplaces for papermaking, printing, bookbinding, box manufacturing, cardboard and the like, or recycled used papers collected from homes and offices.

In the first step of the present invention, waste paper is defibrated. Examples of the device for use in defibrating waste paper include grinders such as a pocket grinder, a chain grinder, a ring grinder; a refiner such as a single disk refiner, a double disk refiner, a conical refiner; another type of refiner such as a beater; an agitating machine such as a blender and a deflaker, a wooden chip fibrillater such as a defibrator and a defibrizer, and a flash dried pulp manufacturing machine such as a fluffer.

Methods for defibrating waste paper using the above-described devices include a wet method for defibrating waste paper in a moist state and a dry method for defibrating fibers in a dry state. The dry method is preferable, since the wet method requires a large amount of water and consumes energy for removing water from the aqueous slurry of waste paper pulp after defibrating with high environmental load. In the dry method for defibrating waste paper, preferably waste paper in a dry state has a water content of 20% or less.

In the case that the defibrated waste paper contains paper pieces, a sieve machine having a predetermined mesh size screen may be used to remove the paper pieces. The sieve machine is not specifically limited so long as the sieve machine has a device with a screen. A type of sieve machine which guides the defibrated waste paper to a screen for removing paper pieces is preferable. The sieve machines described in JP Patent Publication (Kokai) No. 7-185463 A (1995), JP Patent Publication (Kokai) No. 8-126848 A (1996), and JP Patent Publication (Kokai) No. 2008-264750 A are more preferable, which have a function to remove clogging in the screen by injecting air from a rotary airbrush arranged on the downstream side of the screen, toward the rear face of the screen. Examples of sieve machines having such function include a blow-through type of high-performance sieve machine such as "Hi-Bolter" (trade name, manufactured by Toyo Hitec) or "Blower-shifter" (trade name, manufactured by Yougrop).

Preferably the sieve machine has a screen mesh size of 250 $\mu$m to 750 $\mu$m. A screen mesh size smaller than 250 $\mu$m is not preferable, causing reduction in yield in some cases, because waste paper fibers are easily removed together with the paper pieces. A screen mesh size larger than 750 $\mu$m is not preferable, causing paper pieces contained in the defibrated waste paper to pass through the screen in some cases.

According to the sieving step is performed after defibrating waste paper, or before attaching a wax, or after attaching a wax (and preferably further drying). The waste paper pulp fiber is sieved before the step of maintaining plant fibers in the state of floating and being dispersed in air, or the waste paper pulp fiber is sieved after the step of coating the waste paper pulp fibers with wax fine particles. The paper pieces or wax-coated paper pieces, which are mixed into defibrated plant fibers (or pulp fibers) or wax-attached plant fibers, can be removed through the sieving operation, thereby improving the quality of final products.

The defibrated waste paper pulp fibers used in the present invention have no specific limitation on fiber width, but they have a length-weighted mean fiber length of about 0.1 to 5.0 mm, preferably about 0.3 to 2.5 mm, and more preferably 0.3 to 1.5 mm. Large energy is required for defibration to obtain waste paper pulp fibers having a length-weighted mean fiber length less than 0.1 mm. In addition, waste paper pulp fibers having a length-weighted mean fiber length less than 0.1 mm result in less entanglement with a matrix resin, so that the material strength of a final product may be reduced in some cases. In contrast, waste paper pulp fibers having a length-weighted mean fiber length more than 5.0 mm result in too much entanglement with each other, thereby being apt to aggregate fibers, and reducing dispersibility in the matrix resin. As a result, the material strength of a final product may be reduced in some cases. The length-weighted mean fiber length is the mean value of a length-weighted fiber length distribution, which can be measured by the method of Japanese Industrial Standard (JIS) P 8226:2006 (ISO 16065-1:2001), or a method for measuring a pulp fiber length by automated optical analysis with polarized light, using, for example, a fiber length distribution measuring device. The principle comprises automatically measuring a projected length of each of pulp fibers dispersed in water placed in a fiber orientation cell. This method discriminates pulp fibers from other substance such as a gas bubble which causes no rotation of a polarization plane using a crossed Nichol prism, and further includes calculation of various kinds of length-weighted mean fiber length of pulp.

Defibrated recycled newspaper is apt to have a length-weighted mean fiber length in the range of 0.1 to 5.0 mm, and use of recycled newspaper as waste paper is preferable accordingly.

The wax used in the present invention is attached to the surface of plant fibers so as to impart slippage to plant fibers, thereby preventing agglomeration of the plant fibers. In addition, the wax used in the present invention has miscibility with a matrix resin. As such, attaching a wax to the surface of plant fibers allows the plant fibers to be easily dispersed in a matrix resin.

Examples of the wax used in the present invention include a natural wax and a synthetic wax.

Examples of the natural wax include a petroleum wax, a vegetable wax, and an animal-plant wax.

Examples of the petroleum wax include a paraffin wax, a microcrystalline wax, and a petrolatum. Examples of the vegetable wax include a carnauba wax, a candelilla wax, a rice wax, and a Japan wax. Examples of the animal-plant wax include a lanolin and a beeswax.

Examples of the synthetic wax include a synthetic hydrocarbon wax and a modified wax.

Examples of the synthetic hydrocarbon wax include polyethylene wax, polypropylene wax, and Fischer-Tropsch wax. Examples of the modified wax include a paraffin wax derivative, a montan wax derivative, and a microcrystalline wax derivative.

These may be used alone or in combination of two or more kinds.

In particular among the waxes, a synthetic hydrocarbon wax such as a polyethylene wax, a polypropylene wax, and a Fischer-Tropsch wax is preferable, having excellent miscibility with a matrix resin.

A polyethylene wax, a polypropylene wax, and a Fischer-Tropsch wax may be used alone or in combination.

A polyethylene wax, a polypropylene wax, and a Fischer-Tropsch wax may be used together with a wax other than the polyethylene wax, the polypropylene wax, and the Fischer-Tropsch wax. In that case, in order to prevent impairment of miscibility of the polyethylene wax, the polypropylene wax, and the Fischer-Tropsch wax with a matrix resin, the content of the wax other than the polyethylene wax, the polypropylene wax, and the Fischer-Tropsch wax is preferably 30% or less by mass, more preferably 10% or less by mass relative to the total waxes for the combination use.

Examples of the polyethylene wax include an ethylene homopolymer and an ethylene-$\alpha$-olefin copolymer. Alternatively, the wax may be obtained by thermal decomposition of the copolymer. Examples of the $\alpha$-olefin include an $\alpha$-olefin having 3 to 12 carbon atoms such as propylene, 1-butene, 1-pentene, 1-hexene, 4-methyl-1-pentene, and 1-octene.

Examples of the polypropylene wax include a propylene homopolymer, an ethylene-propylene copolymer (which is a random or block copolymer), propylene-$\alpha$-olefin (except for ethylene or propylene) copolymer. Alternatively, the wax may be obtained by thermal decomposition of the copolymer. Examples of the $\alpha$-olefin include 1-butene, 1-pentene, 1-hexene, 1-heptene, 1-octene, 4-methyl-1-pentene, 1-decene, 1-dodecene, 1-tetradecene, 1-hexadecene, and 1-octadecene.

The polyethylene wax and the polypropylene wax can be obtained by a known method using a polymerization catalyst such as a Ziegler catalyst, a Ziegler-Natta catalyst, and a metallocene catalyst. In particular, the polyethylene wax and the polypropylene wax obtained by using a metallocene catalyst as a polymerization catalyst are preferable, having a narrow molecular weight distribution and stable quality, in comparison with the polyethylene wax and the polypropylene wax obtained by using a Ziegler catalyst or a Ziegler-Natta catalyst as a polymerization catalyst.

The Fischer-Tropsch wax is a synthetic hydrocarbon wax mainly comprising linear hydrocarbons, which is obtained by reacting water gas containing carbon monoxide and hydrogen as main components under normal pressure at 170 to 250°C using a catalyst such as cobalt, nickel, or iron.

Preferably the wax has a weight average molecular weight of 2,000 to 20,000, more preferably 3,000 to 18,000. A weight average molecular weight less than 2,000 is apt to cause the bloom phenomenon of leaching out the wax to the surface of a kneaded material of matrix resin and plant fiber composite material, which may damage the quality in some cases. In contrast, a weight average molecular weight more than 20,000 is apt to cause coagulation of the composite material due to reduction in slippage of wax, which may spoil the dispersibility in a matrix resin. As used herein, the weight average molecular weight refers to a polystyrene equivalent molecular weight determined by gel permeation chromatography (GPC, also known as size-exclusive chromatography (SEC), standard substance: polystyrene).

Preferably the endothermic peak temperature of a wax as measured by a differential scanning calorimeter (DSC) is 50 to 200°C, more preferably 70 to 150°C. When the endothermic peak temperature is lower than 50°C, there is a risk which may cause coagulation of the plant fiber composite material due to melting of a wax depending on the storage conditions for the composite material, which spoils the dispersibility in a matrix resin in some cases. In contrast, when the endothermic peak temperature is higher than 200°C, it requires that the kneading temperature is set to a temperature higher than 200°C for prevention of the strength reduction due to residual solid wax remaining in the mixture with the matrix resin, resulting in undesirable thermal degradation of plant fibers at a temperature higher than 200°C in some cases.

Preferably the wax used in the present invention is used in a dispersed form.

Examples of the dispersion medium for the wax include water and organic solvents such as ketones (e.g., acetone, methyl ethyl ketone, methyl isobutyl ketone, and cyclohexanone), alcohols (e.g., C1-C8 lower alcohols such as methyl alcohol, ethyl alcohol, isopropyl alcohol, butyl alcohol , hexyl alcohol, and octyl alcohol), glycol derivatives (e.g., cellosolve, ethylene glycol monoethyl ether, and propylene glycol monomethyl ether), and C1-C5 lower fatty acid esters (e.g., ethyl acetate, butyl acetate, and ethyl propionate).

In particular, among the dispersion media, water is preferable due to small environmental load.

Preferably the solid concentration in the wax dispersion is 20 to 50% by mass. Although the concentration out of the range may also be used so long as plant fibers floating in air can be coated, a concentration less than 20% causes reduction in production efficiency due to increase of an energy required for drying the increased water, while a concentration more than 50% causes difficulty in uniform application of liquid droplets to the surface of plant fibers, resulting in the tendency to form a lump-like coating.

The wax dispersion may be a dispersion dispersed by a conventionally known dispersant, or may be a soap-free wax dispersion. In order to improve stability of the dispersion, a conventionally known thickener may be added. The excessive addition amount of the dispersant and the thickener may affect both of the dispersibility in the matrix resin and the quality of a kneaded material of matrix resin and plant fiber composite material. Preferably the addition amount is 30 parts or less, more preferably 20 parts or less, relative to 100 parts of the wax.

Preferably the wax has an average particle diameter of 0.1 to 100 μm, more preferably 0.4 to 50 μm. An average particle diameter of less than 0.1 μm reduces the slippage due to the excessively small size of wax relative to the plant fibers, being apt to cause coagulation of the composite material, which spoils the dispersibility in a matrix resin in some cases. In contrast, an average particle diameter of more than 100 μm reduces adherability to the plant fibers, hardly imparting slippage to the plant fibers due to the effect of wax. As a result, the composite material is apt to cause coagulation with each other, which spoils the dispersibility in a matrix resin in some cases.

The device for maintaining plant fibers in the state of floating and being dispersed in air is not specifically limited. Examples of the device may include either of a fluidized bed device or an agitating device, and a device combined of an agitating device and a fluidized bed device.

Specific examples of the fluidized bed device include a fluidized bed granulator, a fluidized bed granulator such as a jet fluidized bed granulator, and a tumbling fluidized bed granulator ("Granulation Handbook" edited by Association of Powder Process Industry and Engineering, Japan, 1991, published by Ohmsha, Japan, Table 7.9 on pp.295-296).

Specific examples of the agitating device include an agitation granulator ("Granulation Handbook" edited by Association of Powder Process Industry and Engineering, Japan, 1991, published by Ohmsha, Japan, Table 9.2 on p.390 and Table 9.3 on p.391).

Specific examples of the device combined of a fluidized bed device and an agitating device include an agitating fluidized bed granulator and an agitating tumbling fluidized bed granulator ("Granulation Handbook" edited by Association of Powder Process Industry and Engineering, Japan, 1991, published by Ohmsha, Japan, Table 7.28 on pp.320-321, Table 7.31 on pp.328-329, Table 7.32 on pp.330-331).

In particular, among these devices, the agitating device having agitating impellers at a plurality of places in a container or the device combined of a fluidized bed device and an agitating device is preferable, because the shearing action and the turbulence generated through the agitation by the agitating impellers allow the plant fibers to stay in the state of floating and being dispersed in air for a long time.

Specific examples of the agitating device having agitating impellers at a plurality of places in a container or the device combined of a fluidized bed device and an agitating device include Vertical Granulator (manufactured by Powrex Corporation, Japan), Granumeist (manufactured by Freund Corporation, Japan), SPIR-A-FLOW (made by Freund Corporation), High Speed Mixer (manufactured by Fukae Powtec Company, Japan), High Flex Gral (manufactured by Fukae Powtec Company, Japan), Axial Mixer (made by Sugiyama Heavy Industrial, Japan), Julia Mixer (made by Tokuju Corporation, Japan), and High-speed Agitating Mixing Granulator (manufactured by Nara Machinery, Japan). For example, a preferable device is provided with a plurality of agitating impellers including an agitating impeller at the bottom of a container and another agitating impeller thereabove, so that a gas flow is formed by the impeller at the bottom of a container and fibers are dissociated from the lumps of fibers and maintained in the dissociated state by the upper impeller.

Fine droplets formed from the wax dispersion are attached to the plant fibers. Examples of the device for forming fine droplets from the wax dispersion include a shower device which supplies liquid from fine holes, a spray device which makes liquid droplets with a gas, an ultrasonic spray device, and an electrostatic spray device.

The preferable spray amount of the wax dispersion is substantially proportional to the amount of plant fibers F (weight (g)) to be processed. The spray amount per minute is represented by (0.01 x F) g to (0.05 x F) g. An amount exceeding the upper limit is apt to cause ununiform attachment of the wax to the fibers. In contrast, an amount less than the lower limit results in reduction of production efficiency due to the prolonged time required for the spraying process.

The composite material contains a dispersion medium for wax immediately after application of the wax dispersion to the plant fibers, so that a drying process is required. The method for drying includes a natural drying method and a method using a drying device. Examples of the drying device include a microwave drying device, a vacuum drying device, an infrared drying device, and a hot gas dryer.

The drying process may be concurrently performed with the process of attaching fine droplets of a wax fine particle dispersion to the surface of the plant fibers suspended in air. In that case, a device for dispersing the suspended plant fibers in air, a device for forming fine droplets of the wax dispersion, and a drying device are installed in the same container. Preferably a microwave drying device or a hot gas dryer is used in this case.

Preferably the drying temperature is below the softening temperature of the wax in order to prevent fusion of the wax fine particles attached to the plant fibers. Preferably the plant fiber composite material after drying has a water content of not exceeding 10% by mass. A water content of more than 10% by mass is not preferable, resulting in reduction of production efficiency due to the necessity of heating energy for evaporation of water contained in the plant fiber composite material when the plant fiber composite material is kneaded with a matrix resin, and causing possible deterioration of the matrix resin during increased kneading time by the necessity of the evaporation of the water.

Any one of ventilation drying and agitation drying may be performed after the fine droplets of the wax dispersion are attached to the plant fibers in the state of floating and being dispersed in air.

Preferably the plant fibers and the wax have a compounding ratio of 0.5 to 75 mass parts, more preferably 1 to 50 mass parts, of the wax as solid content relative to 100 mass parts of the plant fibers. A compounding amount of less than 0.5 mass part of the wax based on solid content may cause insufficient dispersion of the plant fiber composite material when the plant fiber composite material is added to and mixed with a matrix resin. A compounding amount of more than 75 mass parts of the additive based on solid content is apt to cause the bloom phenomenon of leaching out the wax to the surface of kneaded material of the matrix resin and the plant fibers composite material, which may damage the quality in some cases.

As described above, the method for producing the plant fiber composite material of the present invention to be kneaded with a matrix has outstanding advantages such as a small drying load due to a small amount of water content, an excellent production yield of more than 90%, and a much smaller amount of waste liquid in comparison with a known wet method.

Preferably the plant fiber composite material of the present invention is compressed into a form of, for example, pellet, tablet, granule, sheet, mat, or block, in order to improve workability. In that case, preferably the plant fiber composite material of the present invention has a bulk density ranging 0.05 to 0.80 g/cm$^3$. A bulk density of lower than 0.05 g/cm$^3$ may cause impairment of workability, because the plant fiber composite material is apt to be scattered. In contrast, a bulk density of the plant fiber composite material of higher than 0.80 g/cm$^3$ allows the plant fiber composite material to be tightly formed and not to be easily loosened, causing the undesirable presence of lumps (i.e., aggregates of fibers) in a matrix resin when kneaded with the matrix resin due to reduced dispersibility in some cases. The bulk density can be adjusted by known machines such as a compression machine, a compactor, a tablet press, and a roll press.

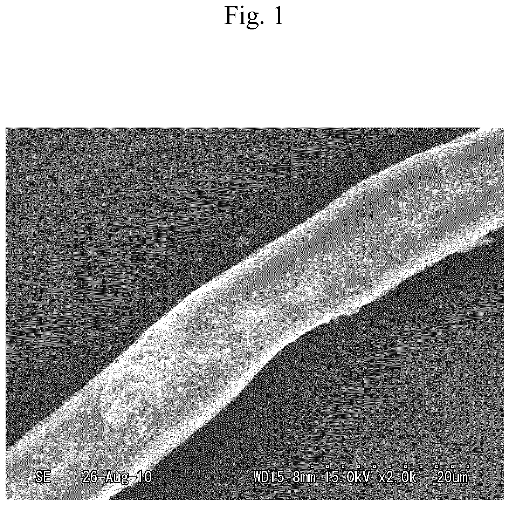

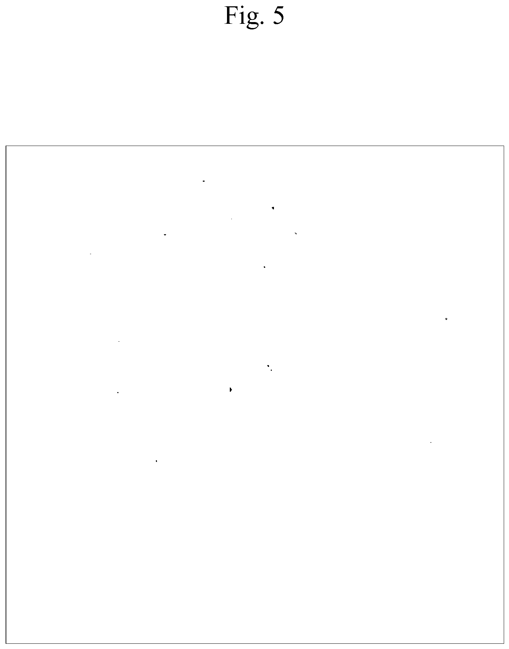

The plant fiber composite material of the present invention, which is produced by the method described above, includes the surface of fibers each coated with the wax fine particles and the coated fibers not glued together (see Fig. 1), having outstanding properties showing uniform dispersion in the matrix resin when kneaded with the matrix resin due to formation of a composite of waste paper pulp fibers and wax (see Fig. 5). The composition of the matrix resin compounded with the plant fiber composite material is formed into a uniform mixture having almost no lump. The composition exhibits excellent properties in a strength test, causing almost no cracking. The elasticity and the abrasion resistance are also improved. As used herein, the term "the presence of coated fibers not glued together" refers to the presence of coated fibers not firmly fastened to each other due to hydrogen bond or fusion with wax, or the presence of coated fibers, each of which can be separated from a lump (in a loose state) with an applied force even when a plurality of coated fibers are formed into the lump.

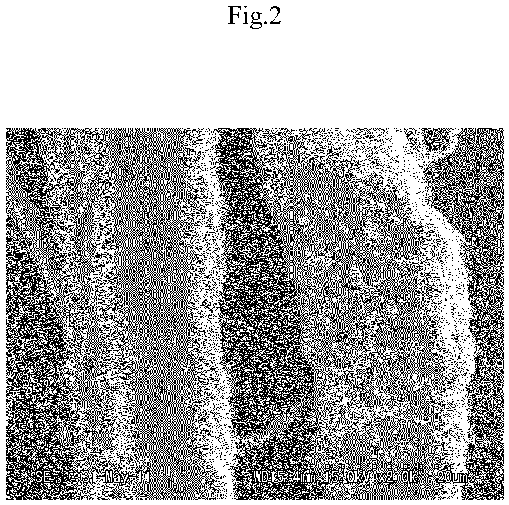

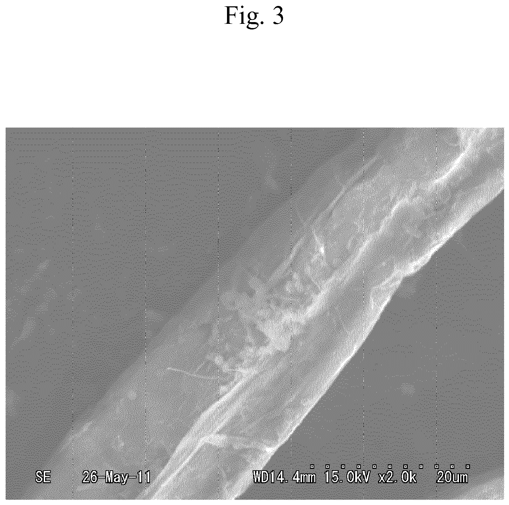

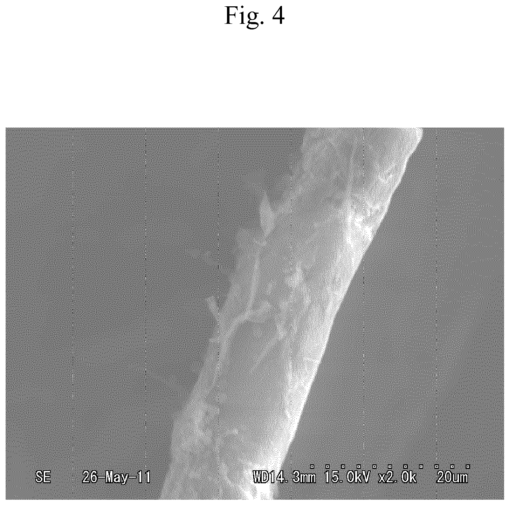

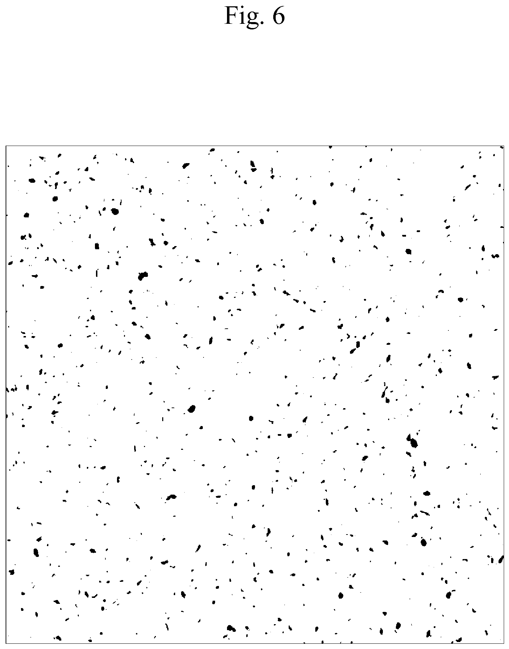

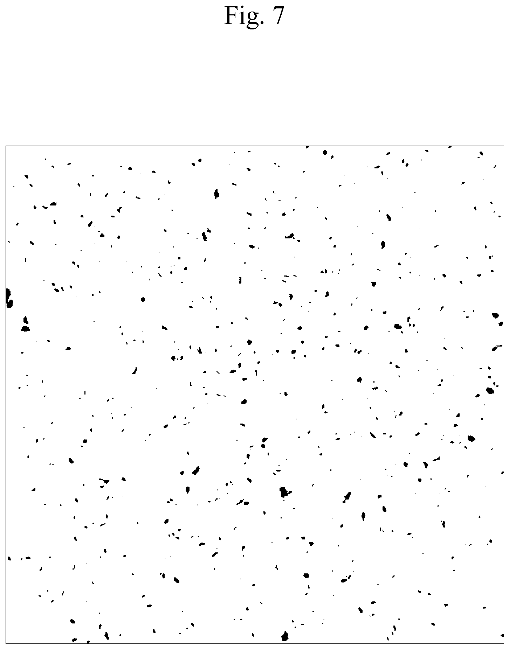

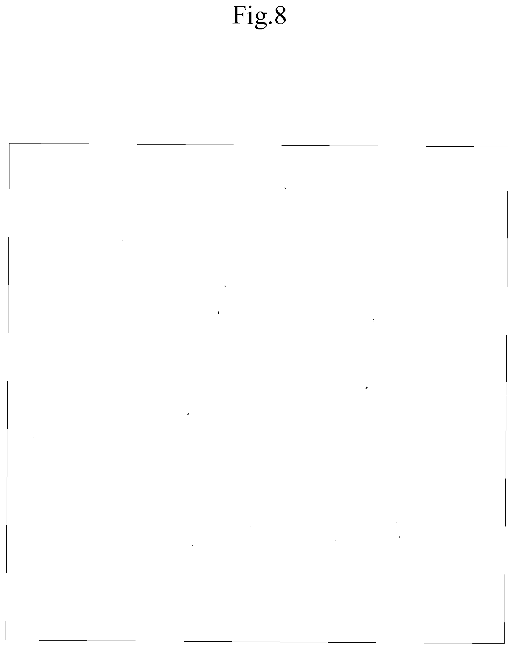

A wet method for producing a plastic modifying agent is described in JP Patent Publication (Kokai) No. 6-73231 A (1993) (Patent Literature 5 above). When a wax emulsion is used as a dispersion accelerator for plant fibers in this method, the wax is not attached to the surface of the fibers so that a material is obtained in such a state that the wax and the fibers have been squeezed together in dehydration step. The method is reproduced in Comparative Examples 2 and 3 later, in which the wax on the fibers is in a state that a lump of wax is partially attached to the fiber surface as shown in Figs. 3 and 4. The state is clearly different from that of application of the wax fine particles on the fiber surface in Figs. 1 and 2 showing the plant fiber composite material of the present invention. Furthermore, as shown in the results of water absorption tests (see Table 4 later), the plant fiber composite material of the present invention has hydrophobic properties and excellent dispersibility when kneaded with a matrix resin (Figs. 5 and 8), while the material obtained by the method of Comparative Examples has distinctly low hydrophobic properties, resulting in poor dispersibility when kneaded with a matrix resin (Figs. 6 and 7). It is clearly considered that the plant fiber composite material of the present invention is materially different from that obtained by the method described in JP Patent Publication (Kokai) No. 6-73231 A (1994).

The plant fiber composite material of the present invention can be kneaded with a matrix resin. The matrix resin to be kneaded includes, but is not specifically limited to, rubbers and thermoplastic resins. The matrix resin may be used alone, or may be used in a combination of two or more resins.

Examples of the rubber include a natural rubber, an epoxidized natural rubber, a deproteinized natural rubber, an isoprene rubber, a butadiene rubber, a styrene butadiene rubber, a chloroprene rubber, an acrylonitrile butadiene rubber, a butyl rubber, an ethylene propylene diene rubber, a chlorinated butyl rubber, a brominated butyl rubber, a millable urethane rubber, and a millable silicone rubber.

A thermoplastic resin is a resin which is softened to exhibit plasticity when heated, and solidified when cooled. Examples of the thermoplastic resins include low density polyethylene, medium density polyethylene, high density polyethylene, linear low density polyethylene, ultralow density polyethylene, ultra high molecular weight polyethylene, ethylene-$\alpha$-olefin copolymer ($\alpha$-olefin having 4 to 12 carbon atoms), polypropylene homopolymer (homopolypropylene), ethylene-propylene copolymer, ethylene-butene-1 copolymer, ethylene-propylene-butene-1 copolymer, ethylene-(4-methylpentene-1) copolymer, propylene-$\alpha$-olefin copolymer ($\alpha$-olefin having 4 to 20 carbon atoms), polybutene, polypentene, polymethyl pentene, maleic anhydride modified polyethylene, maleic anhydride modified polypropylene, ethylene-methyl acrylate copolymer, ethylene-ethyl acrylate copolymer, ethylene-acrylic acid copolymer, ethylene-methacrylic acid copolymer, ethylene-methyl methacrylate copolymer, ethylene-vinyl acetate copolymer, ethylene-sodium acrylate copolymer, maleic anhydride modified ethylene-methyl(meth)acrylate copolymer, maleic anhydride modified ethylene-ethyl (meth)acrylate copolymer, polystyrene, polyvinyl chloride, polyvinylidene chloride, nylon, acrylonitrile-styrene copolymer, acrylonitrile-butadienestyrene copolymer, acrylonitrile-ethylene-styrene copolymer, polymethyl methacrylate, polyethylene terephthalate, polypropylene terephthalate, polybutylene terephthalate, polyhexamethylene terephthalate, polycyclohexylene dimethylene terephthalate, polyethylene naphthalate, polyamide, polyacetal, polycarbonate, polyphenylene sulfide, polyether ether ketone, liquid crystal polymer, polytetrafluoroethylene, polyetherimide, polyarylate, polysulfone, polyether sulfone, polyamide-imide, polylactic acid, polybutylene succinate, polybutylene succinate adipate, polycaprolactone, polybutylene terephthalate adipate, polybutylene terephthalate succinate, polyvinyl alcohol, and polyglycolic acid.

## EXAMPLES

The present invention is described in more detail referring to the following examples. The present invention is not limited thereto, however, as a matter of course. In the Examples, all the "parts" are by mass, and "%" is % by mass.

<Weight average molecular weight determined by gel permeation chromatography (GPC)>

Weight average molecular weight was obtained under the following measurement conditions by gel permeation chromatography (GPC, also known as size-exclusive chromatography (SEC)).
Apparatus: HLC-8121GPC/HT (Detector: Differential refractometer (RI), Tosoh Corporation (Japan))
Column: TSKgel GMHHR-H(20)HT (Tosoh Corporation) x 3
Eluting solvent: 1,2,4-trichlorobenzene (containing 0.05% BHT as an antioxidant)
Flow rate: 1.0 ml/min
Injection amount: 0.3 ml
Standard substance: standard polystyrene (Tosoh Corporation)
Column temperature: 140°C
Sample concentration: 1.0 mg/ml
Sample pretreatment: Wax or wax dispersion in a dry state was weighed, to which a predetermined amount of the eluting solvent was added and then shaken at 140°C for one hour to dissolve the wax in the solvent. Hot filtration was then performed using a 0.5 μm sintered filter.

<Melting endothermic peak temperature determined by differential scanning calorimetry (DSC)>

Endothermic peak temperature was obtained by differential scanning calorimetry (DSC) under the following measurement conditions.
Apparatus: DSC 6200 (SII Nano Technology Inc. (Japan))
Pan: Aluminum sample pan
Sample amount: 6 mg for a wax or wax dispersion in a dry state, or 12 mg for a composite material
Control: empty aluminum pan
Atmosphere: nitrogen flow (50 ml/min)
Measurement region: 40 to 210°C
Rate of elevated temperature: 10°C/min

<Preparation of waste paper pulp fiber A>

A recycled newspaper having a water content of 6.8% was coarsely crushed by a pulp coarse crusher (brand name: FR-160 made by Zuiko Corporation (Japan)) and then dry defibrated by a pulp crusher (brand name: P-270 made by Zuiko Corporation) to obtain waste paper pulp fibers A, which have a length-weighted average fiber length of 1.20 mm.
Endothermic peak temperature was measured by differential scanning calorimetry (DSC) of the waste paper pulp fibers A, resulting in no observation of the endothermic peak.

Example 1

Waste paper pulp fiber A 107.3 parts (water content 6.8%, solid content 100 parts) was fed in a container having agitating impellers at the bottom and the side face. The waste paper pulp fiber A was floated and dispersed in air by agitating the fibers using the high-speed rotating impellers, to which 30 parts (solid content 12 parts) of a polyethylene wax dispersion (brand name: Chemipearl W401 (Mitsui Chemicals, Inc.), solid concentration: 40%, average particle diameter: 1 μm) were sprayed at a feeding rate of about 50 g/min through a two-liquid spray nozzle, and then dried at 80°C for one hour with a hot gas dryer to obtain a plant fiber composite material B.
The polyethylene wax dispersion had a weight average molecular weight determined by gel permeation chromatography (GPC) of 16,000 in a dry state, and a melting endothermic peak temperature determined by differential scanning calorimetry (DSC) 106°C.
In the measurement of the plant fiber composite material B by differential scanning calorimetry (DSC), a melting endothermic peak was observed at 106°C.
Through electron microscopic observation of the plant fiber composite material B, it was conformed that the wax was attached to the surface of the waste paper pulp fibers (Fig. 1).
The obtained plant fiber composite material B 15 parts was kneaded with a mixture of 60 parts of low density polyethylene (reagent grade; Sigma-Aldrich) and 25 parts of maleic anhydride modified polyethylene (reagent grade; Sigma-Aldrich) using Labo Plastomill (Toyo Seiki Seisakusho (Japan)). The kneading temperature was 180°C, and the kneading time was 10 minutes. The obtained kneaded material was press molded at 160°C into a plate-shaped sample.

Example 2

A plant fiber composite material C was obtained by the same method as in Example 1, except that the polyethylene wax dispersion 30 parts (solid content 12 parts) was replaced by 40 parts (solid content 16 parts) of a polypropylene wax dispersion (brand name: Chemipearl WP100, Mitsui Chemicals (Japan); solid concentration: 40%, average particle diameter: 1 μm).
The polypropylene wax dispersion had a weight average molecular weight determined by gel permeation chromatography (GPC) of 9,600 in a dry state, and an endothermic peak temperature determined by differential scanning calorimetry (DSC) 143°C.
In the measurement of the plant fiber composite material C by differential scanning calorimetry (DSC), an endothermic peak was observed at 143°C.
Through electron microscopic observation of the plant fiber composite material C, it was confirmed that the wax was attached to the surface of the waste paper pulp fibers.
The obtained plant fiber composite material C 15 parts was kneaded with a mixture of 60 parts of low density polyethylene (reagent grade, Sigma-Aldrich) and 25 parts of maleic anhydride modified polyethylene (reagent grade,

Sigma-Aldrich) using Labo Plastomill (Toyo Seiki Seisakusho. The kneading temperature was 180°C, and the kneading time was 10 minutes. The obtained kneaded material was press molded at 160°C into a plate-shaped sample.

Example 3

A plant fiber composite material D was obtained by the same method as in Example 1, except that the polyethylene wax dispersion 30 parts (solid content 12 parts) was replaced by 50 parts (solid content 20 parts) of Fischer-Tropsch wax dispersion (brand name: EMUSTAR-6315, Nippon Seiro (Japan); solid concentration: 40%, average particle diameter: 0.4 μm).

The Fischer-Tropsch wax dispersion had a weight average molecular weight determined by gel permeation chromatography (GPC) of 3,400 in a dry state, and an endothermic peak temperature determined by differential scanning calorimetry (DSC) 112°C.

In the measurement of the plant fiber composite material D by differential scanning calorimetry (DSC), an endothermic peak was observed at 112°C.

Through electron microscopic observation of the plant fiber composite material D, it was confirmed that the wax was attached to the surface of the waste paper pulp fiber.

The obtained plant fiber composite material D 15 parts were kneaded with a mixture of 60 parts of low density polyethylene (reagent grade, Sigma-Aldrich) and 25 parts of maleic anhydride modified polyethylene (reagent grade, Sigma-Aldrich) using Labo Plastomill (Toyo Seiki Seisakusho). The kneading temperature was 180°C, and the kneading time was 10 minutes. The obtained kneaded material was press molded at 160°C into a plate-shaped sample.

Comparative Example 1

The waste paper pulp fiber A 15 parts was kneaded with a mixture of 60 parts of low density polyethylene (reagent grade, Sigma-Aldrich) and 25 parts of maleic anhydride modified polyethylene (reagent grade, Sigma-Aldrich) using Labo Plastomill (Toyo Seiki Seisakusho). The kneading temperature was 180°C, and the kneading time was 10 minutes. The obtained kneaded material was press molded at 160°C into a plate-shaped sample.

<Evaluation method 1>

The surface touch feeling and dispersibility (i.e., aggregation or agglomeration state of fibers) of the obtained Examples 1 to 3 and the Comparative Example 1 were evaluated based on the following evaluation standards, as shown in Table 1.

<Surface touch feeling>

The surface touch feeling of the obtained plate-shaped samples were evaluated.
○ : Having no rough feel to the surface.
× : Having rough feel to the surface resulting from bloom.

<Dispersibility>

The dispersed states of fibers of the obtained plate-shaped samples were evaluated by visual observation.
○ : Uniformly dispersed state, and the absence of fiber aggregates.
× : Presence of fiber aggregates.

[Table 1]

| | Surface touch feeling | Dispersibility |
|---|---|---|
| Example 1 | ○ | ○ |
| Example 2 | ○ | ○ |
| Example 3 | ○ | ○ |
| Comparative Example 1 | ○ | × |

Example 4

Waste paper pulp fiber A 107.3 parts (solid content 100 parts, water content 6.8%) was fed in a container having one agitating impeller at the bottom and two agitating impellers on the side face. The waste paper pulp fiber A were floated and dispersed in air by agitating the fibers using the high-speed rotating impellers at the bottom and on the side face, to which 45 parts (solid content 18 parts) of a polyethylene wax dispersion (brand name: Chemipearl W401, Mitsui Chemicals (Japan); solid concentration: 40%, average particle diameter: 1 μm) were sprayed at a feeding rate of about 30 g/min through a two-liquid spray nozzle, and then dried at 80°C for one hour using a hot gas dryer so as to obtain a plant fiber composite material E.

The waste paper pulp fibers and a polyethylene wax have a mixing ratio of 18 mass parts of the polyethylene wax to 100 mass parts of the waste paper pulp fibers.

The plant fiber composite material E had an endothermic peak temperature of 106°C as determined by differential scanning calorimetry (DSC).

Through electron microscopic observation of the plant fiber composite material E, it was confirmed that the wax was attached to the surface of the waste paper pulp fiber (Fig. 2).

<Preparation of waste paper pulp slurry F>

The waste paper pulp fiber A 103 parts (solid content 100 parts, water content 6.8%) and 3097 parts water were mixed and defibrated using a disintegrator to obtain a waste paper pulp slurry F having a solid content of 3%.

Comparative Example 2

A polyethylene wax dispersion (brand name: Chemipearl W401, Mitsui Chemicals; solid concentration: 40%, average particle diameter: 1 μm) 22.5 parts (solid content 9 parts) and water 67.5 parts were uniformly mixed using an agitator to obtain a polyethylene wax dispersion having a solid concentration of 10%. The dispersion was added to the waste paper pulp slurry F 1,000 parts (solid content 30 parts) and then uniformly mixed using an agitator. The waste paper pulp fibers and the polyethylene wax had a mixing ratio of 30 mass parts of the polyethylene wax to 100 mass parts of the waste paper pulp fibers.

Subsequently, the mixture of the waste paper pulp fibers and the polyethylene wax was dehydrated to a solid content of 20% using a screw press, which was then naturally dried for 3 days to obtain a plant fiber composite material G.

The plant fiber composite material G had an endothermic peak temperature of 106°C as determined by differential scanning calorimetry (DSC).

Through electron microscopic observation of the plant fiber composite material G, however, it was confirmed that the wax was scarcely attached to the surface of the waste paper pulp fiber (Fig.3).

Comparative Example 3

A polyethylene wax dispersion (brand name: Chemipearl W401, Mitsui Chemicals; solid concentration: 40%, average particle diameter: 1 μm) 22.5 parts (solid content 9 parts) was added to the waste paper pulp slurry F 1,000 parts (solid content 30 parts) and then uniformly mixed using an agitator. The waste paper pulp fibers and the polyethylene wax had a mixing ratio of 30 mass parts of the polyethylene wax to 100 mass parts of the waste paper pulp fibers.

Subsequently, the mixture of the waste paper pulp fibers and the polyethylene wax was dehydrated to a solid content of 20% using a screw press, which was then naturally dried for 3 days to obtain a plant fiber composite material H.

The plant fiber composite material H had an endothermic peak temperature of 106°C as determined by differential scanning calorimetry (DSC).

Through electron microscopic observation of the plant fiber composite material H, however, it was confirmed that the wax was scarcely attached to the surface of the waste paper pulp fiber (Fig. 4).

<Preparation of waste paper pulp fiber J>

The waste paper pulp slurry F was dehydrated to a solid content of 20% using a screw press, which was then naturally dried for 3 days to obtain a plant fiber composite material J.

<Evaluation method 2>

The wax content and the dispersibility in an isoprene rubber (aggregation or agglomeration state of fibers) of those obtained in Example 4 and the Comparative Examples 2 and 3 were evaluated based on the following evaluation methods.

<Wax content>

The wax content of a plant fiber composite material was calculated from the ash content of the plant fiber composite material.

The ash content was measured in accordance with JIS P 8251:2003 "Paper, board and pulps: Determination of residue (ash) on ignition at 525°C".

Based on the following equation (1), the wax content of Example 4 was obtained based on the ash content of the waste paper pulp fiber A as a standard ash content, and the wax content of each of the Comparative Examples 2 and 3 was obtained base on the ash content of the waste paper pulp fibers J as a standard ash content:

$$Wx\ (\%) = 100-(Xa/Xo) \times 100-Wa \qquad ...(1)$$

wherein, Wx represents a wax content of plant fiber composite material, Xa represents an ash content of plant fiber composite material, Xo represents a standard ash content, and Wa represents a water content of plant fiber composite material.

The wax content of a plant fiber composite material was also calculated from feed amounts, based on the following equation (2):

$$Wt\ (\%) = [W/(P+W)] \times 100 \qquad ...(2)$$

wherein, Wt represents a wax content of a plant fiber composite material calculated from feed amounts, W represents a feed amount of the wax (solid content), and P represents a feed amount of the plant fibers (solid content).

The results of the wax content Wx (%) is shown in Table 2, and the results of the wax content Wt (%) of the plant fiber composite material calculated from the feed amounts and the production yield (%) calculated from the following equation (3) are shown in Table 3.

$$\text{Production yield}\ (\%) = (Wx/Wt) \times 100 \qquad ...(3)$$

[Table 2]

| | Xa (%) | Xo (%) | Wa (%) | Wx (%) |
|---|---|---|---|---|
| Example 4 | 9.52 | 12.00 | 5.8 | 14.9 |
| Comparative Example 2 | 6.60 | 7.66 | 6.9 | 6.9 |
| Comparative Example 3 | 6.47 | 7.66 | 6.9 | 8.6 |

[Table 3]

| | W (part) | P (part) | Wt (%) | Production yield (%) |
|---|---|---|---|---|
| Example 4 | 18 | 100 | 15.3 | 97 |
| Comparative Example 2 | 9 | 30 | 23.1 | 30 |
| Comparative Example 3 | 9 | 30 | 23.1 | 37 |

The results in Table 2 and Table 3 show that the plant fiber composite material E of Example 4 had a wax content Wx (%) approximately equal to the wax content Wt (%) of the plant fiber composite material calculated from the feed amount, while each of the plant fiber composite material G of Comparative Example 2 and the plant fiber composite material H of Comparative Example 3 had a wax content Wx (%) of considerably lower than the wax content Wt (%) of the plant fiber composite material calculated from the feed amount. The results show that the wax not supported by plant fibers was flowed out together with water during dehydration with a screw press so that the production yield worsened.

As clearly shown in the results in Fig. 2, Fig. 3, Fig.4, Table 2, and Table 3, the method of the present invention for producing a plant fiber composite material comprising the steps of maintaining plant fibers in the state of floating and being dispersed in air in a container and supplying and attaching fine droplets of a wax fine particle dispersion to the surface of the plant fibers has a higher efficiency in wax attachment to plant fibers and a higher production yield compared with the production method including adding a wax dispersion to an aqueous slurry of defibrated waste paper pulp.

<Dispersibility in isoprene rubber>

Polyisoprene rubber (brand name: Nipol IR2200, Zeon Corporation) 90 parts and the plant fiber composite material 10 parts were fed sequentially into Labo Plastomill (Toyo Seiki Seisakusho), and then kneaded. The kneading temperature was 70°C, and the kneading time was 10 minutes.

The kneaded material was then press molded at 160°C into a plate-shaped sample.

The dispersion state of fibers in an area of 15 cm by 15 cm of the obtained plate-shaped sample was observed under transmitted light and recorded.

A record drawing (15 cm×15 cm) of observation under transmission light of a plate-shaped sample of a kneaded material of a plant fiber composite material E of Example 4 and the isoprene rubber is shown in Fig. 5. Record drawings (15 cm×15 cm) of observation under transmission light of a plate-shaped sample of the kneaded material of the plant fiber composite material G of Comparative Example 2 and the isoprene rubber and a plate-shaped sample of the kneaded material of the plant fiber composite material H of Comparative Example 3 and the isoprene rubber are shown in Fig. 6 and Fig. 7.

As clearly shown in the results in Fig. 5, Fig. 6, and Fig. 7, the kneaded material of the plant fiber composite material E and the isoprene rubber made by the production method of the present invention had a uniformly dispersed plant fiber composite material shown as extremely small black spots in the matrix resin, without forming lumps (i.e., fiber aggregates) in the entire matrix resin as shown in Fig. 5 (Although the plant fiber composite material shown as relatively large black spots are included in Fig. 5, the plant fiber composite material having extremely small size, not clearly shown as black spots in the figure, is dispersed in the entire area of the plate-like sample in Fig. 5). The plate-like sample made of kneaded material of the plant fiber composite material G and the isoprene rubber made by the production method of Comparative Example 2, and the plate-shaped sample made of the kneaded material of the plant fiber composite material H and the isoprene rubber made by the production method of Comparative Example 3, had plant fiber composite material shown as large black spots dispersed in an uneven state as shown in Fig. 6 and Fig. 7, or in a state having many fibers formed in a form of lump (i.e., fiber aggregates). Figs. 5 to 7 show that the plant fiber composite material manufactured by the production method of the examples of the present invention has extremely excellent dispersibility in the isoprene rubber compared to the plant fiber composite materials produced by the production method of the comparative examples.

Example 5

A plant fiber composite material K was obtained by the same method as in Example 1, except that the waste paper pulp fibers A of Example 1 was processed using a blow-through type of high-performance sieve machine "Hi-Bolter" (trade name, Toyo Hitec (Japan)). A plate-shaped sample was then produced. The obtained samples were evaluated based on the evaluation standards described in "Evaluation method 1". The used screen had a mesh size of 500 μm.

<Evaluation>

Surface touch feeling: ○
Dispersibility: ○
The plant fiber composite material K had more excellent dispersibility compared to the plant fiber composite material B obtained in Example 1.

Example 6

A plant fiber composite material L was obtained by the same method as in Example 4, except that the waste paper pulp fiber A of Example 4 was processed using a blow-through type of high-performance sieve machine "Hi-Bolter" (trade name, Toyo Hitec (Japan)) having a screen with a mesh size of 1 mm and further processed using a blow-through type of high-performance sieve machine "Hi-Bolter" (trade name, Toyo Hitec (Japan)) having a screen with a mesh size of 500 μm. The obtained plant fiber composite materials were evaluated based on the evaluation standards described in "Evaluation method 2".

<Evaluation>

<Wax content>

Ash content of plant fiber composite material Xa: 9.98%
Standard ash content Xo: 12.60%
Water content of plant fiber composite material Wa: 5.8%
Wax content of plant fiber composite material Wx: 15.0%
Feed amount of wax (solid content) W: 18 parts
Feed amount of plant fibers (solid content) P: 100 parts
Wax content of plant fiber composite material calculated from the feed anount Wt: 15.3%
Production yield: 98%

The production method of the plant fiber composite material L obtained in Example 6 is a method providing a high production yield.

<Dispersibility in isoprene rubber>

A record drawing (15 cm×15 cm) of observation under transmission light of a plate-shaped sample is shown in Fig. 8.

The plate-shaped sample in Fig. 8 had a smaller number of plant fiber composite material dispersed in the matrix resin shown as black spots compared to the plate-shaped sample obtained in Example 4 as shown in Fig. 5. The plant fiber composite material L of Example 6 had more excellent dispersibility compared to the plant fiber composite material E of Example 4.

Example 7

The water absorbability of the compressed sample of the plant fiber composite material E made in the Example described above was tested in the following procedures.

<Test method>

1. The composite material was compressed in a tablet form with a diameter of about 30 mm so as to have a bulk density of 0.6 g/cm$^3$.

2. A droplet of pure water in an amount of 200 microliters was dropped onto the tablet surface at a time in an environment at 25°C.

3. The time until completion of water absorption was measured.

4. The procedures 2 to 3 were performed 5 times to calculate the average value of the time until completion of water absorption for the 5 times.

The same test was performed for a compressed sample of the plant fiber composite material L (Example 8), a compressed sample of the waste paper pulp fiber A as a control (Comparative Example 4), a compressed sample of the plant fiber composite material G made in the comparative example (Comparative Example 5), and a compressed sample of the plant fiber composite material H (Comparative Example 6).

<Results>

The measured results are shown in Table 4.

[Table 4]

| | Average |
|---|---|
| Example 7 | 30 minutes or more |
| Example 8 | 30 minutes or more |
| Comparative Example 4 | 9 seconds |
| Comparative Example 5 | 33 seconds |
| Comparative Example 6 | 34 seconds |

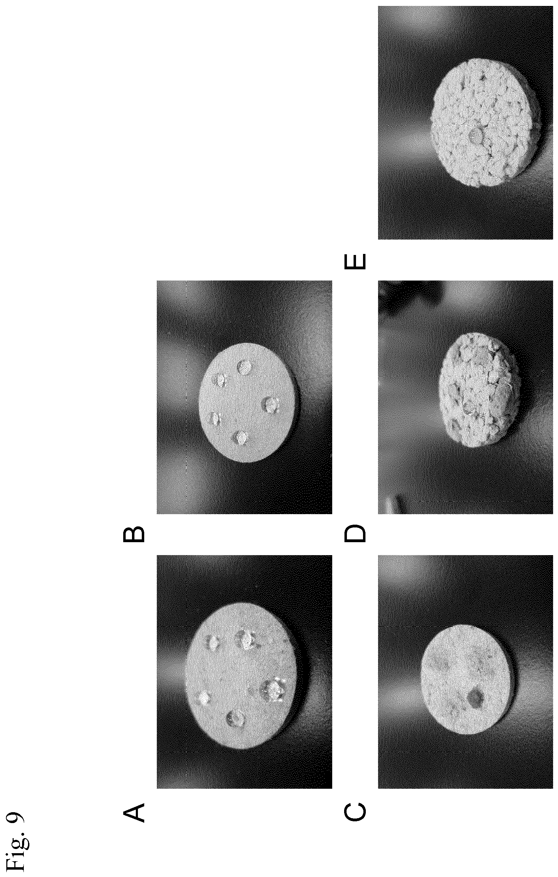

The compressed samples of the plant fiber composite materials of the present invention (Examples 7 and 8) had distinctly slower water absorbability compared to the compressed samples of Comparative Examples 4 to 6. This means that the plant fibers are sufficiently coated with wax, so that the surface of the fiber is hydrophobic. It is considered that this resulted in good dispersibility in matrix resin. For reference, the water absorbability of each sample is shown in Fig. 9. In this figure, A, B, C, D, and E represent the compressed samples of Example 7, Example 8, Comparative Example 4, Comparative Example 5, and Comparative Example 6, respectively.

INDUSTRIAL APPLICABILITY

The waste paper pulp fiber composite material produced by the method of the present invention, which is produced by maintaining the waste paper pulp fibers in the state of floating and being dispersed in air in a container while supplying and attaching fine droplets of a wax fine particle dispersion to the surface of the waste paper pulp fibers during concurrent drying, or by maintaining the waste paper pulp fibers in the state of floating and being dispersed in air in a container while supplying and attaching fine droplets of a wax fine particle dispersion to the surface of the waste paper pulp fibers, is applied with solid wax in an amount not achievable by a method of immersing waste paper pulp fibers in a wax dispersion, resulting in excellent dispersibility into a matrix resin. The waste paper pulp fiber composite material is added to and kneaded with a matrix resin to obtain a reinforced resin having improved properties such as strength, elasticity, and abrasion resistance.

**Claims**

**1.** A method for producing a waste paper pulp fiber composite material to be kneaded with a matrix comprising the following steps of: maintaining waste paper pulp fibers in the state of floating and being dispersed in air in a container; supplying and attaching fine droplets of a wax fine particle dispersion to the surface of the waste paper pulp fibers; and collecting a waste paper pulp fiber composite material comprising the wax-attached waste paper fibers in which the surface of each fiber is coated with wax fine particles, wherein the method further comprises a step of sieving the waste paper pulp fibers before the step of maintaining the waste paper pulp fibers in the state of floating and being dispersed in air, or a step of sieving the waste paper pulp fiber composite material after the step of coating the waste paper pulp fibers with wax fine particles.

**2.** The method according to claim 1, wherein the step of maintaining waste paper pulp fibers in the state of floating and being dispersed in air in a container is performed by forming a fluidized bed of the waste paper pulp fibers using a device selected from an agitating device, a fluidized bed device, and a device combined of an agitating device and a fluidized bed device.

**3.** The method according to claim 1 or 2, wherein the step of maintaining waste paper pulp fibers in the state of floating and being dispersed in air in a container is performed by forming a fluidized bed of the waste paper pulp fibers using an agitating device having agitating impellers arranged at a plurality of places in the container or a device combined of an agitating device and a fluidized bed device.

**4.** The method according to any one of claims 1 to 3, wherein the waste paper pulp fibers have a weighted mean fiber length of 0.1 to 5.0 mm.

**5.** The method according to any one of claims 1 to 4, wherein the waste paper pulp fibers and the wax have a compounding ratio of 0.5 to 75 mass parts of the wax as solid content relative to 100 mass parts of the waste paper pulp fibers.

**6.** The method according to any one of claims 1 to 5, wherein the wax fine particles dispersed in a wax fine particle dispersion have a mean particle diameter of 0.1 to 100 $\mu$m.

**7.** The method according to any one of claims 1 to 6, wherein the wax has a weight average molecular weight as determined by gel permeation chromatography (GPC) in the range of 2,000 to 20,000 and a melting endothermic peak temperature determined by differential scanning calorimetry (DSC) of 50 to 200°C.

**8.** The method according to any one of claims 1 to 7, wherein the matrix is at least one matrix selected from rubbers and thermoplastic resins.

**9.** The method according to any one of claims 1 to 8, further comprising a step of drying the waste paper pulp fiber composite material to be kneaded with a matrix.

**10.** The method according to any one of claims 1 to 9, wherein the wax is a natural wax or a synthesized wax.

**11.** The method according to claim 10, wherein the synthesized wax is a hydrocarbon wax.

**12.** The method according to claim 11, wherein the hydrocarbon wax is a polyethylene wax, a polypropylene wax, a Fischer-Tropsch wax, or a mixture thereof.

**13.** A waste paper pulp fiber composite material to be kneaded with a matrix, which is produced by the method according to any one of claims 1 to 12, wherein the surface of each fiber is coated with wax fine particles, the coated fibers are not glued together, and the waste paper fiber composite material has properties to achieve uniform dispersion in the matrix resin when kneaded with the matrix resin.

**14.** The waste paper pulp fiber composite material to be kneaded with a matrix according to claim 13, wherein the waste paper pulp fiber composite material is in a compressed form.

**Patentansprüche**

**1.** Verfahren zum Herstellen eines Altpapier-Zellstofffaser-Verbundmaterials, das mit einer Matrix geknetet werden soll, wobei das Verfahren die folgenden Schritte umfasst:

Halten der Altpapier-Zellstofffasern in einem Zustand, in dem sie in einem Behälter schweben und in Luft dispergiert sind;
Zuführen feiner Tröpfchen einer Wachsfeindispersion zu der Oberfläche der Altpapier-Zellstofffasern und Befestigen daran; und
Sammeln eines Altpapier-Zellstofffaser-Verbundmaterials, das die Altpapierfasern mit dem befestigen Wachs umfasst, in denen die Oberfläche jeder Faser mit Wachsfeinteilchen beschichtet ist, wobei das Verfahren ferner einen Schritt des Siebens der Altpapier-Zellstofffasern vor dem Schritt des Haltens der Altpapier-Zellstofffasern in dem Zustand, in dem sie schweben und in Luft dispergiert sind, oder einen Schritt des Siebens des Altpapier-Zellstofffaser-Verbundmaterials nach dem Schritt des Beschichtens der Altpapier-Zellstofffasern mit Wachsfeinteilchen umfasst.

**2.** Verfahren nach Anspruch 1, wobei der Schritt des Haltens der Altpapier-Zellstofffasern in dem Zustand, in dem sie in einem Behälter schweben und in Luft dispergiert sind, durch Bilden eines Wirbelbetts der Altpapier-Zellstofffasern unter Verwendung einer Vorrichtung, die aus einer Rührvorrichtung, aus einer Wirbelbettvorrichtung und aus einer Vorrichtung, die aus einer Rührvorrichtung und aus einer Wirbelbettvorrichtung kombiniert ist, ausgewählt wird, ausgeführt wird.

**3.** Verfahren nach Anspruch 1 oder 2, wobei der Schritt des Haltens der Altpapier-Zellstofffasern in dem Zustand, in dem sie in einem Behälter schweben und in Luft dispergiert sind, durch Bilden eines Wirbelbetts der Altpapier-Zellstofffasern unter Verwendung einer Rührvorrichtung mit Rührflügeln, die in dem Behälter an einer Vielzahl von Stellen angeordnet sind, oder einer Vorrichtung, die aus einer Rührvorrichtung und aus einer Wirbelbettvorrichtung kombiniert ist, ausgeführt wird.

4. Verfahren nach einem der Ansprüche 1 bis 3, wobei die Altpapier-Zellstofffasern eine gewichtete mittlere Faserlänge von 0,1 bis 5,0 mm aufweisen.

5. Verfahren nach einem der Ansprüche 1 bis 4, wobei die Altpapier-Zellstofffasern und das Wachs ein Mischungsverhältnis von 0,5 bis 75 Masseanteilen des Wachses als Trockengehalt bezogen auf 100 Masseanteile der Altpapier-Zellstofffasern aufweisen.

6. Verfahren nach einem der Ansprüche 1 bis 5, wobei die in einer Wachsfeindispersion dispergierten Wachsfeinteilchen einen mittleren Teilchendurchmesser von 0,1 bis 100 μm aufweisen.

7. Verfahren nach einem der Ansprüche 1 bis 6, wobei das Wachs ein Gewichtsmittel des Molekulargewichts, wie bestimmt durch Gel-Permeationschromatografie (GPC), in dem Bereich von 2000 bis 20.000 und eine endotherme Spitzenschmelztemperatur, bestimmt durch Differentialscanningkalorimetrie (DSC), von 50 bis 200 °C aufweist.

8. Verfahren nach einem der Ansprüche 1 bis 7, wobei die Matrix wenigstens eine Matrix ist, die aus Gummis und thermoplastischen Harzen ausgewählt wird.

9. Verfahren nach einem der Ansprüche 1 bis 8, das ferner einen Schritt des Trocknens des Altpapier-Zellstofffaser-Verbundmaterials, das mit einer Matrix geknetet werden soll, umfasst.

10. Verfahren nach einem der Ansprüche 1 bis 9, wobei das Wachs ein Naturwachs oder ein synthetisches Wachs ist.

11. Verfahren nach Anspruch 10, wobei das synthetische Wachs ein Kohlenwasserstoffwachs ist.

12. Verfahren nach Anspruch 11, wobei das Kohlenwasserstoffwachs ein Polyethylenwachs, ein Polypropylenwachs, ein Fischer-Tropsch-Wachs oder ein Gemisch davon ist.

13. Altpapier-Zellstofffaser-Verbundmaterial, das mit einer Matrix geknetet werden soll, die durch ein Verfahren nach einem der Ansprüche 1 bis 12 hergestellt wird, wobei die Oberfläche jeder Faser mit Wachsfeinteilchen beschichtet ist, wobei die beschichteten Fasern nicht zusammengeklebt sind, und wobei das Altpapier-Faserverbundmaterial Eigenschaften aufweist, um in dem Matrixharz eine gleichförmige Dispersion zu erzielen, wenn es mit dem Matrixharz geknetet wird.

14. Altpapier-Zellstofffaser-Verbundmaterial, das mit einer Matrix geknetet werden soll, nach Anspruch 13, wobei das Altpapier-Zellstofffaser-Verbundmaterial in einer komprimierten Form ist.

## Revendications

1. Procédé de production d'un matériau composite en fibres de pâte à base de déchets de papier à pétrir avec une matrice, qui comporte les étapes suivantes :

   maintien des fibres de pâte à base de déchets de papier à l'état de flottement et leur dispersion dans l'air à l'intérieur d'un conteneur ;
   fourniture et fixation de fines gouttelettes de particules fines de cire en dispersion à la surface des fibres de pâte à base de déchets de papier ; et
   collecte d'un matériau composite en fibres de pâte à base de déchets de papier constitué des fibres de déchets de papier fixées par la cire, dans lequel la surface de chaque fibre est revêtue de particules fines de cire, où le procédé comprend également une étape de criblage des fibres de pâte à base de déchets de papier intervenant avant l'étape de maintien des fibres de pâte à base de déchets de papier à l'état de flottement et leur dispersion dans l'air, ou une étape de criblage du matériau composite en fibres de pâte à base de déchets de papier intervenant après l'étape de revêtement des fibres de pâte à base de déchets de papier avec les particules fines de cire.

2. Procédé selon la revendication 1, où l'étape de maintien des fibres de pâte à base de déchets de papier à l'état de flottement et leur dispersion dans l'air à l'intérieur d'un conteneur est réalisée en formant un lit fluidisé de fibres de pâte à base de déchets de papier à l'aide d'un dispositif sélectionné parmi un dispositif d'agitation, un dispositif de lit fluidisé et un dispositif combinant un dispositif d'agitation et un dispositif de lit fluidisé.

3. Procédé selon la revendication 1 ou 2, où l'étape de maintien des fibres de pâte à base de déchets de papier à l'état de flottement et leur dispersion dans l'air à l'intérieur d'un conteneur est réalisée en formant un lit fluidisé de fibres de pâte à base de déchets de papier à l'aide d'un dispositif d'agitation comportant des turbines d'agitation disposées à plusieurs endroits du conteneur ou un dispositif combinant un dispositif d'agitation et un dispositif de lit fluidisé.

4. Procédé selon une des revendications 1 à 3, où la longueur moyenne pondérée des fibres de pâte à base de déchets de papier est comprise entre 0,1 et 5 mm.

5. Procédé selon une des revendications 1 à 4, où les fibres de pâte à base de déchets de papier et la cire enregistrent un rapport de composition compris entre 0,5 et 75 éléments de masse de la cire comme contenu solide, par rapport à 100 éléments de masse des fibres de pâte à base de déchets de papier.

6. Procédé selon une des revendications 1 à 5, où le diamètre moyen des particules fines de cire dispersées dans une dispersion de particules fines de cire est compris entre 0,1 et 100 μm.

7. Procédé selon une des revendications 1 à 6, où le poids moléculaire moyen de la cire déterminé par chromatographie par perméation de gel (CPG) est compris entre 2 000 et 20 000 et où sa température endothermique de fusion maximale déterminée par analyse calorimétrique différentielle (ACD) est comprise entre 50 et 200 °C.

8. Procédé selon une des revendications 1 à 7, où la matrice correspond à au moins une matrice sélectionnée parmi les caoutchoucs et les résines thermoplastiques.

9. Procédé selon une des revendications 1 à 8, comportant également une étape de séchage du matériau composite en fibres de pâte à base de déchets de papier à pétrir avec une matrice.

10. Procédé selon une des revendications 1 à 9, où la cire est une cire naturelle ou une cire synthétique.

11. Procédé selon la revendication 10, où la cire synthétique est une cire d'hydrocarbure.

12. Procédé selon la revendication 11, où la cire d'hydrocarbure est une cire de polyéthylène, une cire de polypropylène, une cire de Fischer-Tropsch ou un mélange de celles-ci.

13. Matériau composite en fibres de pâte à base de déchets de papier à pétrir avec une matrice, produit par le procédé selon une des revendications 1 à 12, où la surface de chaque fibre est revêtue de particules fines de cire, les fibres enduites n'adhèrent pas les unes aux autres et le matériau composite en fibres de pâte à base de déchets de papier enregistre des propriétés permettant d'obtenir une dispersion uniforme dans la résine de matrice lors du pétrissage avec la résine de matrice.

14. Matériau composite en fibres de pâte à base de déchets de papier à pétrir avec une matrice selon la revendication 13, où le matériau composite en fibres de pâte à base de déchets de papier se présente sous une forme comprimée.

Fig. 1

SE 26-Aug-10
WD15.8mm 15.0kV x2.0k 20um

Fig.2

SE 31-May-11
WD15.4mm 15.0kV x2.0k 20um

Fig. 3

SE 26-May-11 WD14.4mm 15.0kV x2.0k 20um

Fig. 4

SE 26-May-11 WD14.3mm 15.0kV x2.0k 20um

Fig. 5

Fig. 6

Fig. 7

Fig.8

A
B
C
D
E

Fig. 9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 9012770 A
- JP 2002037929 A
- JP 62104851 A
- JP 11217466 A
- JP 6073231 A
- JP 2007277482 A
- JP 2009091388 A
- JP 7185463 A
- JP 8126848 A
- JP 2008264750 A
- FR 160


### Non-patent literature cited in the description


- Granulation Handbook. Ohmsha, 1991, 295-296
- Granulation Handbook. Ohmsha, 1991, 390, , 391
- Granulation Handbook. Ohmsha, 1991, 320-321, 328-329, 330-331